# EUROPEAN PATENT APPLICATION

(11) **EP 4 383 374 A1**
(43) Date of publication of application: **12.06.2024**
(21) Application number: 22944047.4
(22) Date of filing: 28.12.2022
(51) Int. Cl.: H01M 4/58, H01M 4/62

(54) **POSITIVE ELECTRODE PLATE AND PREPARATION METHOD THEREFOR**

(30) Priority: 27.10.2022 CN 202211323844
(71) Applicant: Xiamen Hithium Energy Storage Technology Co., Ltd., Xiamen, Fujian 361006 (CN)
(72) Inventor: The designation of the inventor has not yet been filed
(74) Representative: Manitz Finsterwald Patent- und Rechtsanwaltspartnerschaft mbB
(86) International application number: PCT/CN2022/142735
(87) International publication number: WO 2024/087375

(57) **Abstract**

Provided is a positive electrode sheet and a preparation method thereof. The positive electrode sheet includes: a current collector and a positive electrode material layer. The positive electrode material layer is coated on the current collector and includes: a Prussian blue-type material containing crystal water, a conductive agent, a binder, and a gelatinous non-aqueous electrolyte. The positive electrode material layer has characteristics satisfying **0.1** ≤ **R2** * **(M1** + **M4)/((M2** + **M3)** * **R1)** ≤9, wherein the M1 represents a thermogravimetric loss rate of the Prussian blue-type material containing crystal water at 200°C~400°C; the M2 represents a mass proportion of the conductive agent in the positive electrode material layer; the M3 represents a mass proportion of the binder in the positive electrode material layer; the M4 represents a mass proportion of the gelatinous non-aqueous electrolyte in the positive electrode material layer; and the R1 represents a resistivity of the positive electrode sheet, and the R2 represents a resistivity of the current collector. Therefore, the Prussian blue-type material will have good crystal structure stability, allowing the positive electrode sheet to have good safety and electrochemical performance, and thus increasing a cycle stability of the battery.

## Description

### CROSS-REFERENCE TO RELATED APPLICATIONS

This application claims priority to Application No. 202211323844.0, filed with the China National Intellectual Property Administration on October 27, 2022 and entitled "POSITIVE ELECTRODE SHEET AND PREPARATION METHOD THEREOF", the entire content of which is incorporated herein by reference.

### FIELD

The present disclosure relates to the technical field of secondary batteries, and specifically to a positive electrode sheet and a preparation method thereof.

### BACKGROUND

With a continuous development of battery technology, lithium-ion batteries with higher energy density have gradually replaced the traditional lead-acid batteries. Although the lithium-ion batteries have the advantages of high energy density and strong charge retention ability, limited reserves of lithium-ion raw materials and high cost of lithium-ion batteries make the lithium-ion batteries cannot meet long-term large-scale power storage needs. Compared with lithium-ion batteries, sodium-ion batteries have the advantages of rich reserves, good safety performance, and low cost. In the manufacture of sodium-ion batteries, Prussian blue-type materials are generally added to the positive electrode sheet to increase an energy density of the sodium-ion batteries. However, when Prussian blue-type materials are discharged as the positive electrode in a liquid electrolyte, the crystal water in its crystal structure will undergo a displacement reaction with an intercalation and deintercalation of sodium ions, and the electrolyte will chemically react with the displaced water molecules, which will reduce safety and a cycle stability of the battery.

### SUMMARY

The present disclosure aims to at least solve one of the technical problems existing in the prior art. To this end, the present disclosure provides a positive electrode sheet with a stable crystal structure when discharging, which can avoid a release of crystal water into the electrolyte, and increase the safety and a cycle stability of the battery.

The present disclosure also aims to provide a preparation method of a positive electrode sheet, which is used to prepare the above-mentioned positive electrode sheet.

A positive electrode sheet according to an embodiment of the present disclosure, includes: a current collector and a positive electrode material layer. The positive electrode material layer is coated on the current collector and includes: a Prussian blue-type material containing crystal water, a conductive agent, a binder, and a gelatinous non-aqueous electrolyte. The positive electrode material layer has characteristics satisfying **0.1 ≤ R2 * (M1 + M4)/((M2 + M3) * R1) ≤**9, wherein the M1 represents a thermogravimetric loss rate of the Prussian blue-type material containing crystal water at 200°C~400°C; the M2 represents a mass proportion of the conductive agent in the positive electrode material layer; the M3 represents a mass proportion of the binder in the positive electrode material layer; the M4 represents a mass proportion of the gelatinous non-aqueous electrolyte in the positive electrode material layer; and the R1 represents a resistivity **of the positive electrode sheet in Ω**·m, and the R2 represents a **resistivity of the current collector in Ω·m.**

According to the positive electrode sheet of an embodiment of the present disclosure, when the positive electrode sheet is produced, the Prussian blue-type material, the conductive agent, the binder, and the gelatinous non-aqueous electrolyte need to be mixed firstly to obtain the positive electrode slurry, and then the positive electrode slurry is coated on the current collector and dried to obtain the positive electrode sheet, in which the gelatinous non-aqueous electrolyte has no fluidity. When a thermogravimetric loss rate of the Prussian blue-type material, a content of the conductive agent, a content of the binder, a content of the gelatinous non-aqueous electrolyte, a resistivity of the positive electrode sheet, and a resistivity of the current collector satisfy the above-mentioned formula, the Prussian blue-type material will have good crystal structure stability, and side reactions will not occur because of too high content of the crystal water, nor will the crystal structure be destroyed because of too low content of the crystal water. The gelatinous non-aqueous electrolyte with no fluidity will also inhibit the side reactions of the Prussian blue-type material. Therefore, the positive electrode sheet will have good safety and electrochemical performance, thereby increasing the cycle stability of the battery.

In some embodiments, the Prussian blue-type material is one or more of Li⁺, Na⁺, and K⁺. Selecting the Prussian blue-type materials containing the above alkali metal ions make the positive electrode sheet have good electrochemical performance.

In some embodiments, the conductive agent is one or more of conductive carbon black, conductive graphite, carbon nanotubes, and carbon nanofibers. The above-mentioned conductive agents have low impedance, which make the positive electrode sheet have good electrical conductivity, and thus improving the electrochemical performance.

In some embodiments, the binder is one or more of polyvinylidene fluoride, styrene butadiene rubber, nitrile rubber, polyimide, sodium carboxymethyl cellulose, sodium alginate, polyacrylic acid, and polytetrafluoroethylene. By adding the above-mentioned binders to the positive electrode material layer, the positive electrode material layer may have good adhesion on the current collector, and thus improving the stability of the positive electrode sheet.

In some embodiments, the gelatinous non-aqueous electrolyte has a dynamic viscosity of 10⁴Pa·s~10¹⁰Pa·s. The gelatinous non-aqueous electrolyte is prepared from a plurality of materials. After the preparation, the gelatinous non-aqueous electrolyte has no fluidity, which can prevent the crystal water in the Prussian blue-type material from being displaced into the electrolyte in the process of charging and discharging of the battery, and thus improving the cycle stability of the positive electrode sheet.

Further, the gelatinous non-aqueous electrolyte includes an electrolyte solute and an organic solvent mixed with the electrolyte solute. The electrolyte solute includes a sodium salt and an organic solute mixed with the sodium salt, and a concentration of the sodium salt in the organic solute is 0.8 mol/L~1.2 mol/L. Preparing the sodium salt and the organic solution according to the above-mentioned ratio can make the gelatinous non-aqueous electrolyte have no fluidity, preventing the crystal water in the Prussian blue-type material from being displaced into the electrolyte in the process of charging and discharging of the battery, and thus improving the cycle stability of the positive electrode sheet.

Further optionally, the organic solute is one or more of polyethylene oxide (PEO), triethylene glycol divinyl ether (TEGDVE), polyvinylidene fluoride-hexafluoropropylene (PVDF-HFP), and polyacrylonitrile (PAN), and the organic solvent is one or more of acetonitrile (CH₃CN), dimethylformamide (DMF), and anisole (C₇H₈O).

In some embodiments, a mass ratio of the electrolyte solute, the Prussian blue-type material containing crystal water, the conductive agent to the binder is (4-6):(90-95):1:1. The positive electrode slurry can be obtained by mixing the above-mentioned materials. Preparing the positive electrode slurry according to the above-mentioned ratio can prevent the crystal water in the Prussian blue-type material from being displaced into the electrolyte in the process of charging and discharging of the battery, and thus improving the cycle stability of the positive electrode sheet.

In some embodiments, M1=0.5%~15%, M2=0.1%~5%, M3=0.1%~5%, M4=0.5%-15%, R1=1~10Ωm, and R2=0.03-0.1Ω·m. By controlling the mass proportion of each material in the positive electrode material layer and the resistivity of the positive electrode sheet and the current collector can make the positive electrode sheet have good electrochemical performance after being produced, and thus improving safety and the cycle stability.

According to a preparation method of a positive electrode sheet of an embodiment of another aspect of the present disclosure, the preparation method is used to prepare the positive electrode sheet according to any one of the above-mentioned embodiments, including: preparing a positive electrode slurry according to a preset proportion, wherein the positive electrode slurry includes a gelatinous non-aqueous electrolyte, a Prussian blue-type material containing crystal water, a conductive agent, and a binder; coating the positive electrode slurry on a current collector to form a positive electrode material layer; and drying the current collector and the positive electrode material layer to form a positive electrode sheet. The positive electrode material layer has characteristics satisfying **0.1** ≤ **R2** * **(M1** + **M4)/((M2** + **M3)** * **R1)**≤9, wherein the M1 represents a thermogravimetric loss rate of the Prussian blue-type material containing crystal water at 200°C~400°C; the M2 represents a mass proportion of the conductive agent in the positive electrode material layer; the M3 represents a mass proportion of the binder in the positive electrode material layer; the M4 represents a mass proportion of the gelatinous non-aqueous electrolyte in the positive electrode material layer; and the R1 represents a resistivity of the positive electrode sheet, and the R2 represents a resistivity of the current collector. Therefore, the positive electrode sheet prepared according to the above-mentioned method has good electrical conductivity and adhesion, and the cycle stability can be improved.

In some embodiments, the preparation method further includes preparing the gelatinous non-aqueous electrolyte according to a preset proportion, specifically including: mixing a sodium salt with an organic solute and organic solvent evenly, wherein a concentration of the sodium salt in the organic solute is 0.8 mol/L~1.2 mol/L. Therefore, the gelatinous non-aqueous electrolyte prepared according to the above-mentioned method has no fluidity, which can prevent the crystal water in the Prussian blue-type material from being displaced into the electrolyte in the process of charging and discharging of the battery, and thus improving the cycle stability of the positive electrode sheet.

Additional aspects and advantages of the present disclosure will be provided at least in part in the following description, or will become apparent at least in part from the following description, or can be learned from practicing of the present disclosure.

### BRIEF DESCRIPTION OF THE DRAWING

The above and/or additional aspects and advantages of the present disclosure will become apparent and understandable from the following description of embodiments taken in conjunction with the accompanying drawings, in which:

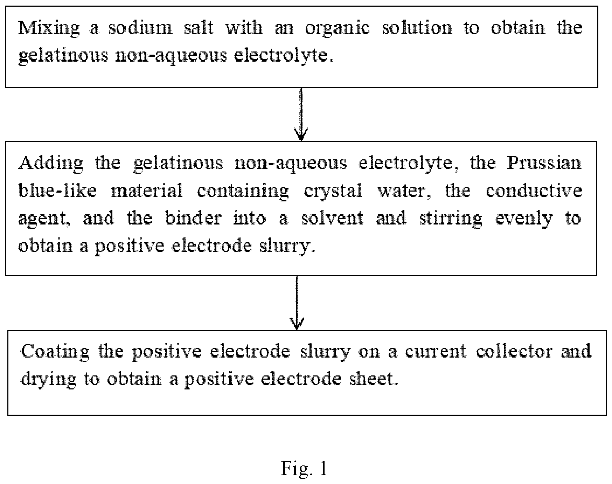

FIG. 1 is a flow chart of a preparation method of a positive electrode sheet of an embodiment of the present disclosure.

### DETAILED DESCRIPTION

Embodiments of the present disclosure are described in detail below, examples thereof are illustrated in the accompanying drawings, throughout which same or similar elements, or elements having same or similar functions, are denoted by same or similar reference numerals. The embodiments described below with reference to the accompanying drawings are exemplary only, and are intended to explain, rather than to limit, the present disclosure.

A positive electrode sheet is provided according to a first aspect of the present disclosure.

The positive electrode sheet includes a current collector and a positive electrode material layer. The positive electrode material layer is coated on the current collector and includes: a Prussian blue-type material containing crystal water, a conductive agent, a binder, and a gelatinous non-aqueous electrolyte. The positive electrode material layer has characteristics satisfying **0.1 ≤ R2 * (M1 + M4)/((M2 + M3) * R1) ≤**9, wherein the M1 represents a thermogravimetric loss rate of the Prussian blue-type material containing crystal water at 200°C~400°C; the M2 represents a mass proportion of the conductive agent in the positive electrode material layer; the M3 represents a mass proportion of the binder in the positive electrode material layer; the M4 represents a mass proportion of the gelatinous non-aqueous electrolyte in the positive electrode material layer; and the R1 represents a resistivity of the positive electrode sheet in Ω·m, and the R2 represents a resistivity of the current collector in Ω·m.

According to the positive electrode sheet of a first aspect of the present disclosure, when the positive electrode sheet is produced, the Prussian blue-type material, the conductive agent, the binder, and the gelatinous non-aqueous electrolyte need to be mixed firstly to obtain the positive electrode slurry, and then the positive electrode slurry is coated on the current collector and dried to obtain the positive electrode sheet, in which the gelatinous non-aqueous electrolyte has no fluidity.

The adsorbed water in the Prussian blue-type materials will be removed during a drying process, therefore, it will not affect the crystal structure stability of the material and the cycle stability of the battery. However, the content of the crystal water in the Prussian blue-type material will have a certain impact on the crystal structure stability. If a content of the crystal water is too high, side reactions will occur in the process of charging and discharging of the battery, resulting in material failure and water molecules being decomposed to produce gas. If a content of the crystal water is too low, the crystal structure of the material will undergo an irreversible phase change, causing the material to lose electrochemical activity of sodium storage and cannot be used as a positive electrode material.

When a thermogravimetric loss rate of the Prussian blue-type material, a content of the conductive agent, a content of the binder, a content of the gelatinous non-aqueous electrolyte, a resistivity of the positive electrode sheet, and a resistivity of the current collector satisfy the above-mentioned formula, the Prussian blue-type material will have good crystal structure stability, and side reactions will not occur because of too high content of the crystal water, nor will the crystal structure be destroyed because of too low content of the crystal water. The gelatinous non-aqueous electrolyte with no fluidity will also inhibit the side reactions of the Prussian blue-type material. Therefore, the positive electrode sheet will have good safety and electrochemical performance, thereby increasing the cycle stability of the battery.

It may be noted that the water in the positive electrode material layer mainly includes crystal water located in the crystal structure of the Prussian blue-type material, and water adsorbed on the surface of the Prussian blue-type material particles and located among the particles (herein collectively referred to as adsorbed water).

In some embodiments, the Prussian blue-type material is one or more of Li⁺, Na⁺, and K⁺. Selecting the Prussian blue-type materials containing the above alkali metal ions make the positive electrode sheet have good electrochemical performance.

In some embodiments, the Prussian blue-type material has a molecular formula of *AₓM*[*M'*(*CN*)₆]*_{y},* in which A represents one or more of alkali metal ions, M represents a transition metal, M' represents a transition metal, 0 < x ≤ 2, and 0 < y < 1.

Preferably, M is selected from one of Mn, Fe, Co, Ni, Cu, Zn, V, and Cr, and M' is selected from one of Mn, Fe, Co, Ni, Cu, Zn, V, and Cr.

In some embodiments, the conductive agent is one or more of conductive carbon black, conductive graphite, carbon nanotubes, and carbon nanofibers. The above-mentioned conductive agents have low impedance, which make the positive electrode sheet have good electrical conductivity, and thus improving the electrochemical performance.

It may be noted that there is no specific limitation on the type of the binder herein, and it can be selected according to actual needs. The binder may be one or more of polyvinylidene fluoride, styrene butadiene rubber, nitrile rubber, polyimide, sodium carboxymethyl cellulose, sodium alginate, polyacrylic acid, and polytetrafluoroethylene. By adding the above-mentioned binder to the positive electrode material layer can make the positive electrode material layer have good adhesion on the current collector, and thus improving the stability of the positive electrode sheet.

In some embodiments, the gelatinous non-aqueous electrolyte has a dynamic viscosity of 10⁴Pa·s~10¹⁰Pa·s. The gelatinous non-aqueous electrolyte is prepared from a plurality of materials. After the preparation, the gelatinous non-aqueous electrolyte has no fluidity, which can prevent the crystal water in the Prussian blue-type material from being displaced into the electrolyte in the process of charging and discharging of the battery, and thus improving the cycle stability of the positive electrode sheet.

Further, the gelatinous non-aqueous electrolyte includes an electrolyte solute and an organic solvent mixed with the electrolyte solute. The electrolyte solute includes a sodium salt and an organic solute mixed with the sodium salt, and a concentration of the sodium salt in the organic solute is 0.8 mol/L~1.2 mol/L. Preparing the sodium salt and the organic solution according to the above-mentioned ratio can make the gelatinous non-aqueous electrolyte have no fluidity, preventing the crystal water in the Prussian blue-type material from being displaced into the electrolyte in the process of charging and discharging of the battery, and thus improving the cycle stability of the positive electrode sheet.

Further optionally, the organic solute is one or more of polyethylene oxide (PEO), triethylene glycol divinyl ether (TEGDVE), polyvinylidene fluoride-hexafluoropropylene (PVDF-HFP), and polyacrylonitrile (PAN), and the organic solvent is one or more of acetonitrile (CH₃CN), dimethylformamide (DMF), and anisole (C₇H₈O).

In some embodiments, a mass ratio of the electrolyte solute, the Prussian blue-type material containing crystal water, the conductive agent to the binder is (4-6):(90-95):1:1. The positive electrode slurry can be obtained by mixing the above-mentioned materials. Preparing the positive electrode slurry according to the above-mentioned ratio can prevent the crystal water in the Prussian blue-type material from being displaced into the electrolyte in the process of charging and discharging of the battery, and thus improving the cycle stability of the positive electrode sheet.

In some embodiments, M1=0.5%~15%, M2=0.1%~5%, M3=0.1%~5%, M4=0.5%-15%, R1 = 1~10Qm, and R2=0.03-0.192-m. By controlling the mass proportion of each material in the positive electrode material layer and the resistivity of the positive electrode sheet and the current collector can make the positive electrode sheet have good electrochemical performance after being produced, and thus improving safety and the cycle stability.

It should be further noted that there is also no specific restriction on the type of the current collector of the positive electrode sheet. The current collector may be selected from one of aluminum foil, porous aluminum foil, stainless steel foil, and porous stainless steel foil.

According to a preparation method of a positive electrode sheet of the second aspect of the present disclosure, the preparation method is used to prepare the positive electrode sheet according to any one of the above-mentioned embodiments, including: preparing a positive electrode slurry according to a preset proportion, wherein the positive electrode slurry includes a gelatinous non-aqueous electrolyte, a Prussian blue-type material containing crystal water, a conductive agent, and a binder; coating the positive electrode slurry on a current collector to form a positive electrode material layer; and drying the current collector and the positive electrode material layer to form a positive electrode sheet. The positive electrode material layer has characteristics satisfying 0.1 ≤ R2 * (M1 + M4)/((M2 + M3) * R1) ≤9, wherein the M1 represents a thermogravimetric loss rate of the Prussian blue-type material containing crystal water at 200°C~400°C; the M2 represents a mass proportion of the conductive agent in the positive electrode material layer; the M3 represents a mass proportion of the binder in the positive electrode material layer; the M4 represents a mass proportion of the gelatinous non-aqueous electrolyte in the positive electrode material layer; and the R1 represents a resistivity of the positive electrode sheet in Ω·m, and the R2 represents a resistivity of the current collector in Ω·m. Therefore, the positive electrode sheet prepared according to the above-mentioned method has good electrical conductivity and adhesion, and the cycle stability can be improved.

In some embodiments, the preparation method further includes preparing the gelatinous non-aqueous electrolyte according to a preset proportion, specifically including: mixing a sodium salt with an organic solute and organic solvent evenly, in which a concentration of the sodium salt in the organic solute is 0.8 mol/L~1.2 mol/L. Therefore, the gelatinous non-aqueous electrolyte prepared according to the above-mentioned method has no fluidity, which can prevent the crystal water in the Prussian blue-type material from being displaced into the electrolyte in the process of charging and discharging of the battery, and thus improving the cycle stability of the positive electrode sheet.

Optionally, the Prussian blue-type material containing crystal water, the conductive agent, the binder, and the gelatinous non-aqueous electrolyte are added to the solvent and stirred evenly, and the mass ratio of the gelatinous non-aqueous electrolyte, the Prussian blue-type material containing crystal water, the conductive agent to the binder is (4~6):(90∼95):1:1.

Further, the positive electrode sheet has a drying temperature of 65°C~85°C. Therefore, the adsorbed water can be dried, and thus improving the cycle stability of the positive electrode sheet.

The present disclosure will be further described below in conjunction with specific examples. It may be understood that the examples described below are only used to explain the present disclosure and do not limit the specific scope of the present disclosure.

### Example 1

### (1) Preparation of the positive electrode sheet

First, sodium hexafluorophosphate (NaPF₆) and polyethylene oxide (PEO) were prepared to obtain an electrolyte solute according to a concentration of sodium hexafluorophosphate (NaPF₆) in polyethylene oxide (PEO) of 1 mol/L; then the electrolyte solute was added to an acetonitrile solvent and stirred evenly to obtain a gelatinous non-aqueous electrolyte; and then the electrolyte solute, the Prussian blue-type positive electrode material, the conductive agent, and the binder were added to the above-mentioned solution and stirred evenly to obtain a positive electrode slurry, in which a mass ratio of the electrolyte solute, the Prussian blue-type positive electrode material, the conductive agent to the binder was 5: 93: 1: 1, the Prussian blue-type material had a chemical formula of *Na*1.82*Mn*[*Fe*(*CN*)₆]0.96·0.97*H*₂*O*, the conductive agent was carbon nanotube (CNT), and the binder was polyvinylidene fluoride (PVDF); then the positive electrode slurry was coated on an aluminum foil current collector and dried at 80°C to obtain a positive electrode sheet.

### (2) Preparation of a battery cell

Firstly, the prepared positive electrode sheet was cut into pieces with length × width of 70.5 × 136.5 mm by a knife die, and a sodium metal negative electrode sheet was cut into pieces with length × width of 72.5 × 138.5 mm; then the positive electrode sheet, the electrolyte containing gelatinous non-aqueous electrolyte, and the negative electrode sheet were assembled in a layer-by-layer manner, finally sealed with an aluminum plastic film.

### Example 2

The preparation methods of the positive electrode sheet and the battery cell were the same as in Example 1, except that the electrolyte solute was prepared from sodium perchlorate (NaClO₄) and triethylene glycol divinyl ether (TEGDVE), and the Prussian blue-type material had a chemical formula of *Na*1.74*Fe*[*Fe*(*CN*)₆]·1.1*H*₂*O.*

### Example 3

The preparation methods of the positive electrode sheet and the battery cell were the same as in Example 1, except that the electrolyte solute was prepared from sodium hexafluorophosphate (NaPF₆) and polyvinylidene fluoride-hexafluoropropylene (PVDF-HFP), and the Prussian blue-type material had a chemical formula of ***Na*1.65*K*0.23*Mn*[*Fe*(*CN*)₆]·1.7*H*₂*O.***

### Example 4

The preparation methods of the positive electrode sheet and the battery cell were the same as in Example 1, except that the electrolyte solute was prepared from sodium trifluoromethanesulfonate (NaCF₃SO₃) and polyvinylidene fluoride-hexafluoropropylene (PVDF-HFP), and the Prussian blue-type material had a chemical formula of ***Na*1.67*Fe*[*Fe*(*CN*)₆]·0.53*H*₂*O*.**

### Example 5

The preparation methods of the positive electrode sheet and the battery cell were the same as in Example 1, except that the electrolyte solute was prepared from sodium bis(oxalate)borate (NaBOB) and polyacrylonitrile (PAN), and the Prussian blue-type material had a chemical formula of ***Na*1.92*Fe*[*Fe*(*CN*)₆]·0.8*H*₂*O*.**

### Comparative Example 1

### (1) Preparation of the positive electrode sheet

First, a mixed solution of sodium hexafluorophosphate (NaPF₆), ethylene carbonate (EC), and diethyl carbonate (DEC) was prepared to obtain an electrolyte solution according to a concentration of sodium hexafluorophosphate (NaPF₆) in a mixed solution of ethylene carbonate (EC) and diethyl carbonate (DEC) of 1 mol/L; then the Prussian blue-type positive electrode material, the conductive agent, and the binder were added to an acetonitrile solution and stirred evenly to obtain a positive electrode slurry, in which a mass ratio of the Prussian blue-type positive electrode material, the conductive agent to the binder were 93:1:1, and the Prussian blue-type material had a chemical formula of ***Na*1.82*Mn*[*Fe*(*CN*)₆]0.96·0.97*H*₂*O*,** the conductive agent was carbon nanotube (CNT), and the binder was polyvinylidene fluoride (PVDF); then the positive electrode slurry was coated on an aluminum foil current collector and dried at 80°C to obtain a positive electrode sheet.

### (2) Preparation of a battery cell

Firstly, the prepared positive electrode sheet was cut into pieces with length × width of 70.5 × 136.5 mm by a knife die, and a sodium metal negative electrode sheet was cut into pieces with length × width of 72.5 × 138.5 mm; then the positive electrode sheet, a separator, and the negative electrode sheet were assembled in a layer-by-layer manner, finally sealed with an aluminum plastic film.

### Comparative Example 2

The preparation methods of the positive electrode sheet and the battery cell were the same as in Example 1, except that the electrolyte solution was prepared from a mixed solution of sodium perchlorate (NaClO₄), ethylene carbonate (EC), and diethyl carbonate (DEC), and the Prussian blue-type material had a chemical formula of ***Na*1.74*Fe*[*Fe*(*CN*)₆]·1.1*H*₂*O.***

### Comparative Example 3

The preparation methods of the positive electrode sheet and the battery cell were the same as in Example 1, except that the electrolyte solution was prepared from sodium hexafluorophosphate (NaPF₆) and polyvinylidene fluoride-hexafluoropropylene (PVDF-HFP), and the Prussian blue-type material had a chemical formula of ***Na*1.65*K*0.23*Mn*[*Fe*(*CN*)₆]·1.7*H*₂*O*.**

### Comparative Example 4

The preparation methods of the positive electrode sheet and the battery cell were the same as in Example 1, except that the electrolyte solution was prepared from a mixed solution of sodium trifluoromethanesulfonate (NaCF₃SO₃), ethylene carbonate (EC), and diethyl carbonate (DEC), and the Prussian blue-type material had a chemical formula of ***Na*1.67*Fe*[*Fe*(*CN*)₆]·0.53*H*₂*O*.**

### Comparative Example 5

The preparation methods of the positive electrode sheet and the battery cell were the same as in Example 1, except that the electrolyte solution was prepared from a mixed solution of sodium bis(oxalate)borate (NaBOB), ethylene carbonate (EC), and diethyl carbonate (DEC), and the Prussian blue-type material had a chemical formula of ***Na*1.92*Fe*[*Fe*(*CN*)₆]·0.8*H*₂*O*.**

### Test methods:

### (1) Resistivity test of the positive electrode sheet

Resistivity test of the positive electrode sheet was performed by using an ACCFILM diaphragm resistivity test system of Chuan Yuan Technology, included: cutting the positive electrode sheets prepared in the above-mentioned examples and comparative examples into a square test sample with the size of 10cm×10cm, clamping two opposite sides of the test sample between two conductive terminals of the above-mentioned resistivity test system, and applying a certain pressure to fix the test sample, finally testing the resistivity R of the test sample. A diameter of the conductive terminals was 14 mm, the pressure applied was 15MPa∼27MPa, and a range of sampling time was 5s∼17s.

The resistivity R1 of the positive electrode sheet was calculated according to a formula R1=R • S/L, where S represents an area of the test sample; L represents a thickness of the test sample, that is, a thickness of the positive electrode sheet.

### (2) Resistivity test of the current collector

The resistivity test of the current collector was the same as the resistivity test of the positive electrode sheet. After testing and calculation, resistivity R2 of the current collector can be obtained. Next, the content of each component in the above-mentioned positive electrode sheet was measured, and the following table was obtained.

**Table 1 Measurement results of the content of each component in the positive electrode sheets of Examples 1~5 and Comparative Examples 1~5**

| Groups | M1 | M2 | M3 | M4 | R1 | R2 | R2 * (M1 + M4)/((M2 + M3) * R1) |
|---|---|---|---|---|---|---|---|
| Example 1 | 5.5 | 1 | 1 | 5 | 2.1 | 0.04 | 6.6 |
| Comparative Example1 | 5.5 | 1 | 1 | 0 | 1.5 | 0.04 | 0.07 |
| Example2 | 6 | 2 | 1 | 8 | 4.2 | 0.03 | 3.82 |
| Comparative Example2 | 6 | 2 | 1 | 0 | 1.3 | 0.03 | 0.05 |
| Example3 | 8.9 | 3 | 2 | 3 | 1.6 | 0.05 | 3.39 |
| Comparative Example3 | 8.9 | 3 | 2 | 0 | 1.2 | 0.05 | 0.07 |
| Example4 | 3 | 1.5 | 0.5 | 10 | 3.7 | 0.06 | 4.08 |
| Comparative Example4 | 3 | 1.5 | 0.5 | 0 | 1.4 | 0.06 | 0.06 |
| Example5 | 1 | 0.5 | 3 | 4 | 4.5 | 0.04 | 0.26 |
| Comparative Example5 | 1 | 0.5 | 3 | 0 | 1.8 | 0.04 | 0.01 |

Then, a specific discharge capacity and a current density of the above-mentioned positive electrode sheets, as well as the cycle discharge performance and cell gas production of the sodium-ion batteries were tested, and the following table was obtained.

**Table 2 Performance indexes of Examples 1~5 and Comparative Examples 1~5**

| Groups | Chemical formula of the Prussian blue-type material | Electrolyte | R2 * (M1 + M4) /((M2 + M3) * R1) | specific discharge capacity mAh/g) | current density (mA/g) | charge/d ischarge retention rate after 100 cycles (%) | Gas produc tion of 2Ah soft pack battery cell |
|---|---|---|---|---|---|---|---|
| Example 1 | Na1.82Mn [Fe(CN)6] 0.96 • 0.9 7H2O | NaPF6/PEO | 6.6 | 160 | 50 | 98 | None |
| Comparati ve Example1 | Na1.82Mn [Fe(CN)6] 0.96 • 0.9 7H2O | NaPF6/EC/DEC | 0.07 | 160 | 50 | 92 | 5mL |
| Example2 | Na1.74Fe[ Fe(CN)6] • 1.1H2O | NaClO4/TE GDVE | 3.82 | 122 | 20 | 96 | None |
| Comparati ve Example2 | Na1.74Fe[ Fe(CN)6] • 1.1H2O | NaClO4 EC/DEC | 0.05 | 120 | 20 | 88 | 15mL |
| Example3 | Na1.65K0. 23Mn[Fe( CN)6] • 1.7H2O | NaPF6 /PVDF-HFP | 3.39 | 155 | 30 | 97 | None |
| Comparati ve Example3 | Na1.65K0. 23Mn[Fe( CN)6] • 1.7H2O | NaPF6/PVD F-HFP | 0.07 | 150 | 30 | 90 | 10mL |
| Example4 | Na1.67Fe[ Fe(CN)6] •0.53H2O | NaCF3SO3/ PVDF-HFP | 4.08 | 138 | 50 | 96 | None |
| Comparati ve Example4 | Na1.67Fe[ Fe(CN)6] •0.53H2O | NaCF3SO3 EC/DEC | 0.06 | 137 | 50 | 87 | 12mL |
| Example5 | Na1.92Fe[ Fe(CN)6] • 0.8H2O | NaBOB/PA N | 0.26 | 144 | 100 | 98 | None |
| Comparati ve Example5 | Na1.92Fe[ Fe(CN)6] • 0.8H2O | NaBOB EC/DEC | 0.01 | 140 | 100 | 90 | 8mL |

When testing the cycle performance of the sodium-ion battery, the sodium-ion battery was charged at a constant current rate of 1C to 4.0V at 25°C, and then charged at a constant voltage of 4.0V to a current of 0.2C, and then left to stand for 5 minutes, then discharged at a constant current rate of 1C to a voltage of 1.5V, and then left to stand for another 5 minutes. This was a cycle charge and discharge process, and the discharge capacity this time was recorded as the first cycle discharge capacity of the sodium-ion battery. The sodium-ion battery was subjected to 100 cycles of charge/discharge test according to the above-mentioned method, and the discharge capacity of the 100 cycles was detected and obtained. A capacity retention rate of the sodium-ion battery after 100 cycles (%) = discharge capacity of the 100th cycle of the sodium-ion battery / discharge capacity of the 1st cycle of the sodium-ion battery × 100%.

When testing the gas production of the soft pack battery cell, the soft pack battery cell was put into silicon oil, and the gas production of the battery cell was judged by judging the volume change of a gas bag in the soft pack battery cell. When testing, the battery cell was charged according to a voltage of 1.5V-4.0V and a current of 2Ah. The gas production of the battery cell was judged by a change of a liquid level of the silicon oil.

As can be seen from the data in the above-mentioned table, when the Prussian blue-type materials in the positive electrode material layer were the same, compared with using the liquid electrolyte, 100 cycles charge/discharge retention rate of the sodium-ion battery has been significantly improved when the sodium salt and the organic solution were prepared to form a gelatinous non-aqueous electrolyte. In addition, the measurement results of the gas production of the batteries show that no gas was generated when using the gelatinous non-aqueous electrolyte.

Preferably, the Prussian blue-type material in the positive electrode material layer was Na1.82Mn[Fe(CN)6]0.96 • 0.47H2O, which has a weight loss rate of 4% under the condition of 40~200°C, and a weight loss rate of 1.5% under the condition of 200~400°C. The conductive agent was conductive carbon nanofiber (CNF), which has a mass fraction of 2%. The binder was nitrile rubber (NBR), which has a mass fraction of 1%. The gelatinous non-aqueous electrolyte had a mass fraction of 6%. The resistivity of the positive electrode sheet was 1.5 Ω·m, the resistivity of the current collector was 0.04 Ω·m, and R2 × M1/((M2+M3+M4)×R1 )=0.012.

Preferably, the Prussian blue-type material in the positive electrode material layer was Na1.74Fe[Fe(CN)6] • 3.4H2O, which has a weight loss rate of 9.5% under the condition of 40~200°C, and a weight loss rate of 7% under the condition of 200~400°C. The conductive agent was conductive carbon nanofiber (CNF), which has a mass fraction of 1.5%. The binder was nitrile rubber (NBR), which has a mass fraction of 1.5%. The gelatinous non-aqueous electrolyte has a mass fraction of 5%. The resistivity of the positive electrode sheet was 3 Ω·m, the resistivity of the current collector was 0.03 Ω·m, and R2×M1/((M2+M3+M4)× R1 )=0.012.

Preferably, the Prussian blue-type material in the positive electrode material layer was Na1.7K0.3Mn[Fe(CN)6] • 1.7H2O, which has a weight loss rate of 5.5% under the condition of 40~200°C, and a weight loss rate of 3.4% under the condition of 200~400°C. The conductive agent was conductive carbon nanofiber (CNF), which has a mass fraction of 1%. The binder was nitrile rubber (NBR), which has a mass fraction of 2%. The gelatinous non-aqueous electrolyte has a mass fraction of 9%. The resistivity of the positive electrode sheet was 3.5 Ω·m, the resistivity of the current collector was 0.035 Ω·m, and R2 × M1/((M2+M3+M4)×R1 )=0.046.

Therefore, the conductive agent and the binder in the present disclosure are evenly embedded in the positive electrode material layer to form a three-dimensional network structure, which is conducive to a rapid transmission of electrons and the bonding between the particles of each component, and thus improving a specific capacity and a cycle stability of the material. The gelatinous non-aqueous electrolyte composed of sodium salt and organic solution can be evenly coated on the surface of the Prussian blue-type material particles, which can construct sodium-ion transmission network in the positive electrode sheet, reduce the interfacial impedance, and ensure a rapid transmission of sodium ions in the positive electrode sheet. The gelatinous non-aqueous electrolyte has no fluidity after molding. Therefore, the crystal water in the Prussian blue-type material will not be displaced into the electrolyte in the process of charging and discharging, which not only ensure the crystal structure stability of the Prussian blue-type material, provide good specific capacity and cycle stability for the battery, but also can avoid the occurrence of side reactions caused by the release of the crystal water into the electrolyte, thus improving the safety and cycle stability of the battery.

In the description of this specification, the description of the reference terms such as "embodiment" and "example" means that the specific features, structures, materials or characteristics described in connection with the embodiment or example are included in at least an embodiment or example of the present disclosure. In this specification, exemplary descriptions of the foregoing terms do not necessarily refer to the same embodiment or example. Moreover, the specific features, structures, materials, or characteristics described may be combined in any one or more embodiments or examples in a suitable manner.

Although embodiments of the present disclosure have been illustrated and described, those skilled in the art can understand that various changes, modifications, substitutions, and variations can be made to these embodiments without departing from the principles and purposes of the present disclosure. The scope of the present disclosure shall be defined by the claims and their equivalents.

## Claims

1. A positive electrode sheet, comprising:
a current collector;
a positive electrode material layer, wherein the positive electrode material layer is coated on the current collector and comprises: a Prussian blue-type material containing crystal water, a conductive agent, a binder, and a gelatinous non-aqueous electrolyte, and the positive electrode material layer has characteristics satisfying 0.1 ≤ R2 * (M1 + M4)/((M2 + M3) * R1) ≤9, wherein
the M1 represents a thermogravimetric loss rate of the Prussian blue-type material containing crystal water at 200°C~400°C;
the M2 represents a mass proportion of the conductive agent in the positive electrode material layer;
the M3 represents a mass proportion of the binder in the positive electrode material layer;
the M4 represents a mass proportion of the gelatinous non-aqueous electrolyte in the positive electrode material layer; and
the R1 represents a resistivity of the positive electrode sheet in Ω·m, and the R2 represents a resistivity of the current collector in Ω·m.

2. The positive electrode sheet according to claim 1, wherein the Prussian blue-type material is one or more of Li⁺, Na⁺, and K⁺.

3. The positive electrode sheet according to claim 1, wherein the conductive agent is one or more of conductive carbon black, conductive graphite, carbon nanotubes, and carbon nanofibers.

4. The positive electrode sheet according to claim 1, wherein the binder is one or more of polyvinylidene fluoride, styrene butadiene rubber, nitrile rubber, polyimide, sodium carboxymethyl cellulose, sodium alginate, polyacrylic acid, and polytetrafluoroethylene.

5. The positive electrode sheet according to claim 1, wherein the gelatinous non-aqueous electrolyte has a dynamic viscosity of 10⁴Pa·s~10¹⁰Pa·s.

6. The positive electrode sheet according to claim 5, wherein the gelatinous non-aqueous electrolyte comprises an electrolyte solute and an organic solvent mixed with the electrolyte solute, the electrolyte solute comprising a sodium salt and an organic solute mixed with the sodium salt, and a concentration of the sodium salt in the organic solute is 0.8 mol/L~1.2 mol/L.

7. The positive electrode sheet according to claim 6, wherein the organic solute is one or more of polyethylene oxide, triethylene glycol divinyl ether, polyvinylidene fluoride-hexafluoropropylene, and polyacrylonitrile, and the organic solvent is one or more of acetonitrile, dimethylformamide, and anisole.

8. The positive electrode sheet according to claim 6, wherein a mass ratio of the electrolyte solute, the Prussian blue-type material containing crystal water, the conductive agent to the binder is (4~6):(90~95): 1:1.

9. The positive electrode sheet according to claim 1, wherein M1=0.5%~15%, M2=0.1%~5%, M3=0.1%~5%, M4=0.5%~15%, R1=1~10Ω·m, and R2=0.03∼0.1Ω•m.

10. A preparation method of a positive electrode sheet, wherein the preparation method is used to prepare the positive electrode sheet according to any one of claims 1 to 5, comprising:
preparing a positive electrode slurry according to a preset proportion, wherein the positive electrode slurry comprises a gelatinous non-aqueous electrolyte, a Prussian blue-type material containing crystal water, a conductive agent, and a binder;
coating the positive electrode slurry on a current collector to form a positive electrode material layer; and
drying the current collector and the positive electrode material layer to form the positive electrode sheet, wherein
the positive electrode material layer has characteristics satisfying 0.1 ≤ R2 * (M1 + M4)/((M2 + M3) * R1) ≤9; where
the M1 represents a thermogravimetric loss rate of the Prussian blue-type material containing crystal water at 200°C~400°C;
the M2 represents a mass proportion of the conductive agent in the positive electrode material layer;
the M3 represents a mass proportion of the binder in the positive electrode material layer;
the M4 represents a mass proportion of the gelatinous non-aqueous electrolyte in the positive electrode material layer; and
the R1 represents a resistivity of the positive electrode sheet, and the R2 represents a resistivity of the current collector.

11. The preparation method of a positive electrode sheet according to claim 10, further comprising preparing the gelatinous non-aqueous electrolyte according to a preset proportion, specifically comprising:
mixing a sodium salt with an organic solute to form an electrolyte solute, and then mixing the electrolyte solute with an organic solvent evenly to obtain a gelatinous electrolyte, wherein a concentration of the sodium salt in the organic solute is 0.8 mol/L-1.2 mol/L.
